# FASCICULE DE BREVET EUROPEEN

(11) **EP 1 636 767 B1**
(45) Date de publication et mention de la délivrance du brevet: **02.10.2013**
(21) Numéro de dépôt: 04741860.3
(22) Date de dépôt: 22.06.2004
(51) Int. Cl.: G07F 7/10

(54) **METHODE D'ALLOCATION DE RESSOURCES SECURISEES DANS UN MODUE DE SECURITE**
VERFAHREN ZUR ZUWEISUNG VON GESICHERTEN RESSOURCEN IN EINEM SICHERHEITSMODUL
A METHOD FOR ALLOCATION OF SECURE RESOURCES IN A SECURITY MODULE

(30) Priorité: 25.06.2003 EP 03014209
(43) Date de publication de la demande: 22.03.2006
(73) Titulaire: Nagravision S.A., 1033 Cheseaux-sur-Lausanne (CH)
(72) Inventeur: KSONTINI, Rached, CH-1004 Lausanne (CH); JOLY, Stéphane, CH-1098 Epesses (CH); CANTINI, Renato, CH-1782 Belfaux (CH); TAZI, Mehdi, CH-1028 Préverenges (CH)
(74) Mandataire: Wenger, Joel-Théophile
(86) Numéro de dépôt international: PCT/EP2004/051198
(87) Numéro de publication internationale: WO 2004/114229

(56) Documents cités:
- EP-A- 0 973 135
- WO-A-01/27886
- WO-A2-98/52161
- US-A- 5 577 121
- US-A1- 2002 050 528
- US-B1- 6 385 723
- BRUCE SCHNEIER: "Applied Cryptography" 1996, JOHN WILEY & SONS, INC. , USA 238530 , XP002267052 page 513 - page 514

## Description

La présente invention concerne le domaine de la téléphonie sans-fil dite aussi téléphonie cellulaire. Elle concerne plus particulièrement des fonctions évoluées impliquant des mécanismes de sécurité ouverts à des fournisseurs spécifiques d'application.

Le module de sécurité d'un téléphone portable, plus connu sous l'appellation "carte SIM", est le coeur de la sécurité de ces téléphones. L'opérateur de téléphonie introduit à la fabrication ou lors d'une phase de personnalisation les informations nécessaires pour identifier d'une manière sûre tous les téléphones voulant se connecter sur son réseau.

A cet effet, il comprend au minimum un numéro unique et une clé cryptographique permettant d'identifier la carte SIM de manière sûre.

Si cette carte était initialement uniquement dédiée au service de téléphonie, de nouvelles applications ont vu le jour telles que l'affichage de cours boursiers ou des informations météo.

Pour parvenir à ce type d'application, le premier modèle a été de relier le fournisseur de ces données à l'opérateur qui les transmettait à destination des téléphones concernés.

Si cette solution convient bien pour des données généralistes telles que la météo, elle est inappropriée en ce qui concerne des données sensibles telles qu'un relevé bancaire.

Ainsi, ce type de service a buté sur un problème de confidentialité car il n'est pas acceptable que de telles données doivent transiter par l'opérateur de téléphonie mobile.

Une autre approche a été de donner aux fournisseurs les moyens cryptographiques (notamment les clés) pour accéder de façon sécurisée à la carte SIM. Cette approche a buté sur le problème inverse au précédent à savoir la transmission de secret de l'opérateur vers un fournisseur, ce qui n'est pas acceptable pour l'opérateur.

Le document US 6'385'723 décrit une solution de chargement d'applications dans une carte électronique (IC card). La méthode décrite consiste à authentifier les applications à charger par une autorité (Certification Authority) avant de pouvoir charger une telle application dans une carte. Cette méthode bien que garantissant une grande sécurité, n'offre aucune souplesse et fait intervenir l'autorité à chaque changement à effectuer dans l'application.

Le document EP 0 973 135 est également une illustration de l'état de la technique. Une machine spécialisée est seule habilitée à mettre à jour des paramètres de sécurité. Il s'agit plutôt d'une initialisation d'un module de sécurité effectué hors d'une zone protégée. Aucune indication permettant l'accès ou la résiliation d'applications chargées postérieurement est décrite dans ce document.

Ainsi, le but de la présente invention est de proposer une méthode qui tienne compte des impératifs de sécurité des différents intervenants et permette de proposer le téléchargement et la gestion des applications sécurisées d'une manière décentralisée sur un téléphone portable.

Ce but est atteint par une méthode d'allocation de zones de mémoire selon la revendication 1. Selon un exemple, une méthode d'allocation de ressources d'un module de sécurité d'un appareil connecté à un réseau, ce réseau étant administré par un opérateur, lesdites ressources étant utilisées par des fournisseurs d'application, consiste dans les étapes suivantes :

- génération d'une paire de clés asymétriques et stockage de la clé privée dans le module de sécurité, la clé publique étant stockée chez l'opérateur,

- introduction d'au moins une clé publique de l'opérateur dans le module de sécurité,

- réception par l'opérateur d'une requête d'un fournisseur, cette requête comprenant au moins la clé publique du fournisseur,

- transmission par l'opérateur d'une instruction de réservation d'une ressource vers le module de sécurité accompagnée par la clé publique du fournisseur,

- transmission par l'opérateur de la clé publique du module de sécurité au fournisseur,

- établissement d'une communication sécurisée entre le fournisseur et le module de sécurité,

- chargement d'une application par le fournisseur dans le module de sécurité.

Cette méthode présente l'avantage d'allouer des ressources d'une manière contrôlée du fait que la réservation, voire le blocage d'une ressource est sous le contrôle de l'opérateur alors que l'exploitation de cette ressource est sous le contrôle du fournisseur, sans que l'opérateur puisse avoir accès aux données échangées.

Une ressource est une zone mémoire d'un module de sécurité dont une partie est constituée par un programme et une autre partie est constituée par des données.

Le processeur du module de sécurité exécute le programme de la ressource d'une manière sécurisée c'est-à-dire que l'exécution ne peut faire appel à des plages de la zone mémoire hors de la zone de la ressource.

Grâce à cette ressource, un fournisseur peut par exemple stocker le numéro de compte bancaire et identifier le titulaire du compte.

Si l'opérateur souhaite résilier une ressource, il est le seul à pouvoir dialoguer avec le module de sécurité au niveau de la gestion des ressources. Le blocage ou la libération d'une ressource provoque la désactivation ou l'effacement de toute la zone mémoire dédiée à cette ressource et en particulier la désactivation ou l'effacement de la clé publique du fournisseur correspondant.

La disparition physique ou virtuelle de cette clé publique interdit toute nouvelle authentification mutuelle entre le fournisseur et le module de sécurité, et empêche par la même occasion une mise à jour ou un nouveau téléchargement d'application par ce même fournisseur dans cette ressource bloquée ou libérée. La zone des ressources comprend une partie de gestion dans laquelle va se trouver la définition de l'utilisation de chaque zone.

Cette partie de gestion est gérée par l'opérateur. Elle contient l'identifiant du fournisseur, la clé de ce fournisseur et des informations permettant l'adressage de la zone mémoire. Cette partie pourra comprendre également des indications de dates si le fournisseur peut utiliser la ressource durant un temps limité. Passé cette date, la ressource est désactivée ou effacée et en particulier, la clé publique du fournisseur est désactivée ou effacée.

Selon une autre variante, cette partie pourra également comprendre des indications du nombre d'exécutions si le fournisseur et/ou l'utilisateur final peut utiliser la ressource pour un nombre d'exécution limité. Passé ce nombre d'exécution, la ressource est désactivée ou effacée et en particulier, la clé publique du fournisseur est désactivée ou effacée.

L'invention sera mieux comprise grâce à la description détaillée qui va suivre et qui se réfère aux dessins annexés qui sont donnés à titre d'exemple nullement limitatif, à savoir:

- la figure 1 illustre l'étape de personnalisation d'un module de sécurité,

- la figure 2 illustre la transmission entre un fournisseur et un opérateur,

- la figure 3 illustre les échanges de données entre les trois entités,

- la figure 4 illustre un module de sécurité à allocation de ressources.

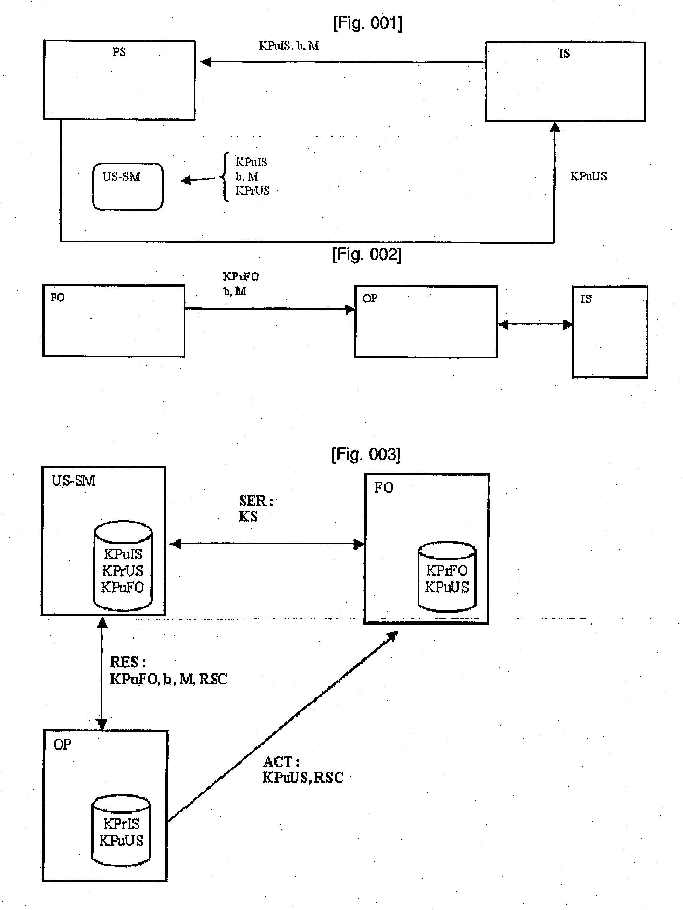

Selon la figure 1, l'initialisation d'un module de sécurité US-SM est effectuée par une entité PS telle qu'un fabricant de modules de sécurité. Cette entité PS place une clé publique KPuIS qui correspond à l'autorité en charge de la gestion de ces modules, ainsi qu'une clé privée KPrUS propre à ce module de sécurité.

Comme il sera décrit plus bas, d'autres paramètres de personnalisation tels que des données de génération b, M (base et modulo) servant à la génération d'une clé symétrique peuvent également être stockés dans le module de sécurité.

L'entité de personnalisation PS renvoie à l'autorité IS les indications de person-nalisation c'est-à-dire, pour un module donné (généralement identifié par une adresse unique ou un identificateur unique), sa clé publique KPuUS. D'autres données telles que les caractéristiques du module, comme sa taille mémoire et ses modules crypto-graphiques sont également mémorisés par l'autorité.

La figure 2 illustre l'opération de requête par un fournisseur FO d'une ressource auprès de l'opérateur OP.

Afin de pouvoir accéder aux ressources d'un module de sécurité, un fournisseur FO va, dans une première phase, s'adresser à l'opérateur OP. Le fournisseur FO et l'opérateur OP vont alors se mettre d'accord sur les modalités de leur partenariat. Selon notre exemple, l'opérateur OP va requérir les informations nécessaires auprès de l'autorité IS; l'opérateur OP et l'autorité IS étant deux entités différentes. Dans un autre cas, il est possible que l'opérateur OP comprenne les fonctionnalités de l'autorité IS.

Le fournisseur FO va transmettre entre autre sa clé publique KPuFO à l'opérateur OP et informer des caractéristiques de la ressource nécessaire. Les données b, M servant à la génération d'une clé symétrique peuvent également être transmises à ce moment.

La figure 3 illustre trois opérations: SER, RES et ACT.

L'étape de réservation RES consiste à créer une ressource dans un module de sécurité. Un abonné, via son module de sécurité US-SM, peut émettre le souhait auprès de l'opérateur OP de profiter des services proposés par le fournisseur FO. Dans un tel cas, l'opérateur OP récupère la clé publique KPuFO du fournisseur FO et ensuite, va initier une opération de réservation de ressource RSC dans le module de sécurité. L'opérateur dispose d'informations concernant l'utilisation des ressources pour chaque module de sécurité. Il pourra déterminer, en fonction du typé de besoin du fournisseur FO, la ressource la plus appropriée, par exemple selon la taille de l'espace mémoire demandé.

L'opérateur envoie une commande de réservation vers le module de sécurité, cette commande étant bien entendu sécurisée par la clé privée KPrOP de l'opérateur. Cette commande va réserver une ressource c'est-à-dire qu'une partie de la zone mémoire va recevoir des données propres à autoriser un dialogue avec un fournisseur. Lors de cette opération, le module de sécurité va recevoir la clé publique KPuFO du fournisseur, clé qui lui permettra d'établir une liaison sécurisée avec ce fournisseur.

Durant cette opération, si l'opérateur ne dispose pas de la clé du module de sécurité, il pourra la requérir auprès de l'autorité IS. Cette requête se fait naturellement d'une manière sécurisée entre ces deux entités.

La seconde étape ACT consiste à communiquer les données d'un abonné ou module de sécurité au fournisseur FO. L'opérateur OP lui communique la clé publique KPuUS et l'identification de la ressource RSC qui lui a été attribuée.

Le fait que la clé publique de chaque module de sécurité soit unique, signifie que l'opérateur OP ou l'autorité IS, une fois le module de sécurité US-SM identifié, va rechercher dans sa base de données la clé publique KPuUS propre à ce module pour la transmettre au fournisseur.

Cette initialisation faite, l'étape SER d'utilisation de ce service peut être activée et l'utilisateur pourra appeler un numéro spécialisé qui le mettra directement en liaison avec le fournisseur. Celui-ci aura pour première mission de charger son application dans le module de sécurité US-SM, dans la zone mémoire qui lui a été allouée par l'opérateur. Une clé de session KS est générée pour l'échange sécurisé de code et/ou de données.

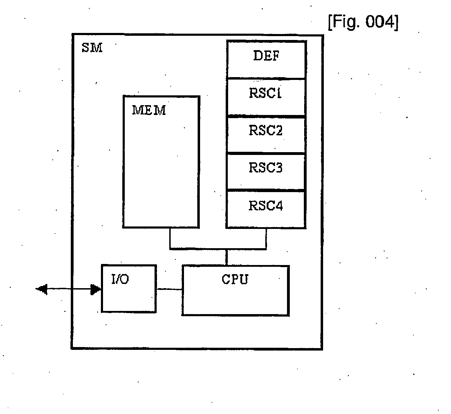

La figure 4 illustre l'organisation du module de sécurité. Ce dernier est composé d'une unité de traitement CPU, d'une mémoire de travail MEM dans laquelle est stocké le programme d'exploitation du module et une zone de mémoire destinée aux ressources externes. Cette zone dispose d'une première partie dite de définition DEF qui contient les données définissant une ressource RSC1 à RSC4. Dans la pratique, la zone mémoire des ressources n'est pas nécessairement divisée à l'avance. Lorsqu'un fournisseur demande une ressource à l'opérateur, il peut spécifier également la taille de la mémoire nécessaire. Ainsi la zone mémoire des ressources pourra contenir d'autant plus de ressources différentes que chaque ressource utilise peu de mémoire. La partie de définition DEF contiendra les indications de début et de fin de chaque ressource.

A chaque ressource RSC peuvent être associées des informations supplémentaires indiquant p.ex. les droits d'accès à certaines interfaces de programmations (ou librairies) disponibles sur le module de sécurité US-SM telles que des algorithmes cryptographiques ou autres processus de calculation particuliers. De telles informations peuvent être sauvegardées p.ex. dans la zone DEF ou dans la zone RSC respective.

Le module I/O schématise la communication avec l'appareil hôte tel qu'un téléphone portable.

Il existe plusieurs méthodes pour l'établissement d'une connexion sécurisée entre deux entités. Dans le cadre de l'invention, il est prévu d'utiliser une paire de clés asymétriques, l'entité principale disposant de la clé privée et l'entité tierce recevant la clé publique. La clé privée n'est en principe pas envoyée par des moyens de télécommunication mais directement introduite dans le dispositif lors d'une phase d'initialisation sécurisée. La clé publique est envoyée selon les scénarios décrits ci-dessus pour dialoguer avec ce dispositif.

En pratique, l'échange d'une clé publique se fait souvent à l'aide d'un certificat associé à cette clé. Lorsqu'une entité B reçoit la clé publique d'une entité A, cette clé est contenue dans un certificat qui est signé par une autorité à laquelle l'entité A fait confiance, par exemple par l'opérateur. Dans certains cas, il peut arriver que les entités A et B se soient déjà authentifiées au préalable et que le canal à travers lequel ils communiquent soit suffisamment sur pour qu'ils puissent se transmettre une clé publique sans certificat.

Des clés asymétriques, telles que clés RSA, permettent une authentification des partenaires. Une entité A s'authentifie par une opération utilisant sa propre clé privée KPrA. Une entité B peut alors vérifier la validité de cette authentification à l'aide de la clé publique correspondante KPuA. Le cryptage basé sur des clés asymétriques est lourd et implique des moyens cryptographiques importants. C'est pourquoi les clés asymétriques sont utilisées généralement pour l'authentification et la génération d'une clé de session symétrique. Il est aussi possible d'utiliser les clés asymétriques pour l'authentification, et utiliser la méthode décrite par Diffie & Hellmann pour la génération d'une clé de session symétrique.

Selon un des modes de réalisation, l'étape de réservation d'une ressource comprend, en plus de l'envoi de la clé publique KPuFO du fournisseur, l'envoi des paramètres Diffie & Hellmann soit le module M et la base b propre à ce fournisseur. Ainsi, lors de l'établissement d'une clé de session entre le fournisseur et un module de sécurité d'un abonné, ces paramètres seront utilisés sans qu'il soit nécessaire de les transmettre à nouveau.

Il est possible d'utiliser la même méthode de Diffie & Hellmann pour générer une clé de session entre le module de sécurité et l'opérateur, l'étape d'initialisation des modules de sécurité pourrait comprendre dans ce cas une étape supplémentaire qui consiste à introduire les paramètres Diffie & Hellmann propre à l'opérateur dans les modules de sécurité.

Selon un premier mode de l'établissement d'une liaison sécurisée, l'échange des données entre les deux dispositifs utilisera la clé publique de l'autre dispositif. Cette manière de procéder a l'avantage que dans le même temps qu'une clé symétrique KS est générée permettant de sécuriser les échanges, l'authentification des partenaires est faite.

Selon un deuxième mode de l'établissement d'une liaison sécurisée, une clé de session est générée d'une manière classique entre les entités A et B sur la base des paramètres Diffie & Hellmann. Une fois cette clé de session établie, une procédure d'authentification mutuelle est initiée. Par exemple, l'entité A peut signer à l'aide de sa clé privée KPrA certaines des valeurs échangées avec B lors de la négociation Diffie & Hellman, et adresser à B la signature ainsi générée. L'entité B peut alors authentifier A en vérifiant la signature à l'aide de la clé KPuA. De manière similaire, l'entité B peut signer à l'aide sa clé privée KPrB certaines des valeurs échangées avec A lors de la négociation Diffie & Hellmann, et adresser à A la signature ainsi générée. L'entité A peut alors authentifier B en vérifiant la signature à l'aide la clé KPuB.

Il existe aussi d'autres méthodes pour l'établissement de cette liaison sécurisée par exemple en inversant les deux étapes précédentes, c'est-à-dire d'utiliser la cryptographie à clé publique/privée pour authentifier les deux partenaires et ensuite générer la clé de session.

Dans la pratique, il se peut que diverses entités interviennent dans les différentes étapes. La génération des clés est confiée à une première autorité qui les communique, du moins la partie privée, à un intégrateur en vue de la personnalisation des modules de sécurité. Il est à noter que cette génération peut s'effectuer directement dans le module de sécurité et que seule la clé publique soit communiquée lors d'une phase d'initialisation, dans un environnement sécurisé.

Cette base de données des clés publiques associées au numéro unique (UA) de chaque module de sécurité peut, soit être gérée par l'opérateur, soit être déléguée à une entité tierce. C'est cette entité qui assurera les fonctions d'allocation de ressources en lieu et place de l'opérateur.

Dans une autre forme de réalisation de l'invention, il est souhaitable que le chargement d'une application puisse s'effectuer d'une manière globale. Du fait que les modules de sécurité utilisent une clé unique par module, une étape intermédiaire est ajoutée lors de la réservation de la ressource. Dans les paramètres transmis par l'opérateur OP vers un module de sécurité, une clé de domaine est ajoutée, clé qui est commune à tous les modules de sécurité pour une application donnée. La définition de la ressource est spécifique à chaque module de sécurité selon sa capacité matérielle, mais une fois définie, elle reçoit un nom logique qui est commun à tous les modules ainsi qu'une clé commune. Le fournisseur FO peut donc télécharger, soit simultanément en mode diffusion son application dans tous les modules connectés, soit par une procédure indépendante du module de sécurité, lors d'un appel de ce module au serveur du fournisseur. Cette clé de domaine DK peut être soit symétrique, soit asymétrique selon l'implémentation de la méthode. Cette clé remplacera la paire de clés publique/privée du module de sécurité lors de l'établissement de la liaison sécurisée.

## Revendications

1. Méthode d'allocation de zones de mémoire d'un module de sécurité d'un appareil connecté à un réseau, ce réseau étant administré par un opérateur (OP), lesdites zones de mémoire (RSC) étant utilisées par des fournisseurs d'application (FO), cette méthode étant **caractérisée en ce qu'**elle comporte les étapes suivantes :
- génération d'une paire de clés asymétriques et stockage de la clé privée dans le module de sécurité (US-SM), la clé publique (KPuUS) étant stockée chez une autorité (IS) en charge de la gestion du module de sécurité,
- introduction d'au moins une clé publique (KPuIS) de l'autorité (IS) dans le module de sécurité (US-SM),
- réception par l'opérateur (OP) d'une requête d'un fournisseur (FO) et transmission de cette requête à l'autorité (IS), cette requête comprenant au moins la clé publique du fournisseur (KPuFO) et des caractéristiques de la zone mémoire nécessaire,
- transmission par l'autorité (IS) de la clé publique du module de sécurité (KPuUS) à l'opérateur (OP),
- transmission par l'opérateur (OP) d'une instruction de réservation d'une zone de mémoire (RSC) selon la taille de l'espace mémoire demandé vers le module de sécurité (US-SM) accompagnée par la clé publique du fournisseur (KPuFO), l'opérateur (OP) disposant d'informations concernant l'utilisation des zones de mémoire du module de sécurité (US-SM),
- transmission par l'opérateur (OP) de la clé publique (KPuUS) du module de sécurité au fournisseur (FO),
- établissement d'une communication sécurisée entre le fournisseur (FO) et le module de sécurité (US-SM),
- chargement d'une application par le fournisseur (FO) dans le module de sécurité (US-SM), sans que l'opérateur puisse accéder aux données échangées entre le fournisseur et le module de sécurité.

2. Méthode d'allocation de zones de mémoire selon la revendication 1, **caractérisé en ce que** les conditions d'effacement sont remplies lorsque un programme de la zone de mémoire a été exécuté un nombre de fois égal ou supérieur à un nombre limité prédéterminé.

3. Méthode d'allocation de zones de mémoire selon la revendication 1, **caractérisé en ce que** les conditions d'effacement sont remplies lorsque un programme de mémoire a été exécuté pendant un temps égal ou supérieur à un temps limité prédéterminé.

4. Méthode d'allocation de zones de mémoire selon la revendication 1, **caractérisé en ce que** la paire de clés asymétriques est générée par le module de sécurité, la clé publique étant alors transmis à l'autorité.

5. Méthode d'allocation de zones de mémoire selon la revendication 1, **caractérisé en ce que** des paramètres d'initialisation d'une clé de session (M, b) propre à l'opérateur sont stockés dans les modules de sécurité lors de l'initialisation.

6. Méthode d'allocation de zones de mémoire selon les revendications 1 à 5, **caractérisée en ce que** le fournisseur transmet des paramètres d'initialisation d'une clé de session (M, b) à l'opérateur, ces paramètres étant transmis au module de sécurité lors de la réservation d'une zone de mémoire.

7. Méthode d'allocation de zones de mémoire selon les revendications 1 à 6, **caractérisée en ce que** l'établissement d'une communication sécurisée entre le fournisseur et le module de sécurité est basé sur l'utilisation de la clé publique du fournisseur par le module de sécurité et par l'utilisation de la clé publique du module de sécurité par le fournisseur.

8. Méthode d'allocation de zones de mémoire selon la revendication 5, **caractérisée en ce que** l'établissement d'une communication sécurisée entre l'opérateur et le module de sécurité est basé sur la génération d'une clé de session utilisant les paramètres d'initialisation (M, b) de l'opérateur.

9. Méthode d'allocation de zones de mémoire selon la revendication 6, **caractérisée en ce que** l'établissement d'une communication sécurisée entre le fournisseur et le module de sécurité est basé sur la génération d'une clé de session utilisant les paramètres d'initialisation (M, b) du fournisseur.

10. Méthode d'allocation de zones de mémoire selon l'une des revendications précédentes, **caractérisée en ce que** l'autorité (IS) et l'opérateur (OP) forment une même entité.

11. Méthode d'allocation de zones de mémoire selon l'une des revendications précédentes, **caractérisée en ce que** l'instruction de réservation d'une zone de mémoire (RES) comprend l'envoi d'une clé de domaine (DK) spécifique à une application et commune à tous les modules de sécurité disposant de cette application, cette clé étant utilisée pour l'établissement de la communication sécurisée entre le fournisseur FO et le module de sécurité.
- empêchement d'une mise à jour ou d'un nouveau chargement d'application par le fournisseur (FO) dans la zone mémoire dédiée à une application determinée par l'effacement par l'opérateur (OP) de la dépublique du fournisseur et de toute cette zone mémoire lorsque les conditions d'effacement sont remplies.

## Patentansprüche

1. Verfahren zur Bereitstellung von Speicherbereichen eines Sicherheitsmoduls eines mit einem Netz verbundenen Apparats, wobei das Netz von einem Bediener (OP) verwaltet wird und die Speicherbereiche (RSC) von Anwendungslieferanten (FO) benutzt werden, wobei das Verfahren **dadurch gekennzeichnet ist, dass** es die folgenden Schritte umfasst:
- Erzeugung eines Paars asymmetrischer Schlüssel und Speicherung des privaten Schlüssels in dem Sicherheitsmodul (US-SM), während der öffentliche Schlüssel (KPuUS) bei einem Verwalter (IS) des Sicherheitsmoduls gespeichert ist,
- Einführung mindestens eines öffentlichen Schlüssels (KPuIS) des Verwalters (IS) in das Sicherheitsmodul (US-SM),
- Empfang, durch den Bediener (OP), einer Anfrage eines Lieferant (FO) und Übertragung dieser Anfrage an den Verwalter (IS), diese Anfrage umfasst mindestens den öffentliche Schlüssel des Lieferanten (KPuFO) und Merkmale des nötigen Speicherbereichs,
- Übertragung, durch den Verwalter (IS), des öffentlichen Schlüssels des Sicherheitsmoduls (KPuUS) an den Bediener (OP),
- Übertragung, durch den Bediener (OP), einer Anweisung zur Reservierung eines Speicherbereichs (RSC) je nach der Größe des beantragten Speicherplatzes an das Sicherheitsmodul (US-SM), begleitet vom öffentlichen Schlüssel des Lieferanten (KPuFO), wobei der Bediener (OP) über Informationen betreffs der Benutzung der Speicherbereiche des Sicherheitsmoduls (US-SM) verfügt,
- Übertragung, durch den Bediener (OP), des öffentlichen Schlüssels (KPuUS) des Sicherheitsmoduls an den Lieferanten (FO),
- Aufbau einer gesicherten Kommunikation zwischen dem Lieferanten (FO) und dem Sicherheitsmodul (US-SM),
- Laden einer Anwendung in das Sicherheitsmodul (US-SM) durch den Lieferanten (FO), ohne dass der Bediener zu den zwischen dem Lieferanten und dem Sicherheitsmodul ausgetauschten Daten Zugang hat,
- Verhinderung einer Aktualisierung oder des erneuten Herunterladens einer Anwendung durch den Lieferanten (FO) in dem Speicherbereich, der einer bestimmten Anwendung gewidmet ist, indem der Bediener (OP) den öffentlichen Schlüssel des Lieferanten löscht und auch diesen gesamten Speicherbereich, wenn die Löschbedingungen erfüllt sind.

2. Verfahren zur Bereitstellung von Speicherbereichen nach Anspruch 1, **gekennzeichnet dadurch, dass** die Löschbedingungen erfüllt sind, wenn die Zahl der Ausführungen eines Programms des Speicherbereichs gleich oder höher als eine vorgegebene begrenzte Zahl ist.

3. Verfahren zur Bereitstellung von Speicherbereichen nach Anspruch 1, **gekennzeichnet dadurch, dass** die Löschbedingungen erfüllt sind, wenn ein Programm des Speicherbereichs während einer Zeit ausgeführt wurde, die gleich oder höher als eine vorgegebene begrenzte Zeit ist.

4. Verfahren zur Bereitstellung von Speicherbereichen nach Anspruch 1, **gekennzeichnet dadurch, dass** das Paar asymmetrischer Schlüssel durch das Sicherheitsmodul erzeugt wird, woraufhin der öffentliche Schlüssel an den Verwalter übertragen wird.

5. Verfahren zur Bereitstellung von Speicherbereichen nach Anspruch 1, **gekennzeichnet dadurch, dass** Parameter zur Initialisierung eines Sitzungsschlüssels (M, b), der im Besitz des Bedieners ist, bei der Initialisierung in den Sicherheitsmodulen gelagert werden.

6. Verfahren zur Bereitstellung von Speicherbereichen nach den Ansprüchen 1 bis 5, **gekennzeichnet dadurch, dass** der Lieferant Initialisierungsparameter eines Sitzungsschlüssels (M, b) an den Bediener überträgt, wobei diese Parameter bei der Reservierung eines Speicherbereichs an das Sicherheitsmodul übertragen werden.

7. Verfahren zur Bereitstellung von Speicherbereichen nach den Ansprüchen 1 bis 6, **gekennzeichnet dadurch, dass** der Aufbau einer gesicherter Kommunikation zwischen dem Lieferanten und dem Sicherheitsmodul auf der Benutzung des öffentlichen Schlüssels des Lieferanten durch das Sicherheitsmodul und auf der Verwendung des öffentlichen Schlüssels des Sicherheitsmoduls durch den Lieferanten basiert.

8. Verfahren zur Bereitstellung von Speicherbereichen nach Anspruch 5, **gekennzeichnet dadurch dass** der Aufbau einer gesicherten Kommunikation zwischen dem Bediener und dem Sicherheitsmodul auf der Erzeugung eines Sitzungsschlüssels unter Benutzung der Initialisierungsparameter (M, b) des Bedieners basiert.

9. Verfahren zur Bereitstellung von Speicherbereichen nach Anspruch 6, **gekennzeichnet dadurch, dass** der Aufbau einer gesicherten Kommunikation zwischen dem Lieferanten und dem Sicherheitsmodul auf der Erzeugung eines Sitzungsschlüssels unter Benutzung der Initialisierungsparameter (M, b) des Lieferanten basiert.

10. Verfahren zur Bereitstellung von Speicherbereichen nach einem der vorhergehenden Ansprüche, **gekennzeichnet dadurch, dass** der Verwalter (IS) und der Bediener (OP) dieselbe Einheit bilden.

11. Verfahren zur Bereitstellung von Speicherbereichen nach einem der vorhergehenden Ansprüche, **gekennzeichnet dadurch dass** die Anweisung zur Reservierung eines Speicherbereichs (RES) mit der Sendung eines Bereichschlüssels (DK) einhergeht, der spezifisch für eine Anwendung und allen Sicherheitsmodulen gemein ist, die über diese Anwendung verfügen, wobei dieser Schlüssel für den Aufbau der gesicherten Kommunikation zwischen dem Lieferanten FO und dem Sicherheitsmodul benutzt wird.

## Claims

1. Memory zones allocation method for a security module of an apparatus connected to a network, this network being administrated by an operator (OP), said memory zones (RSC) being used by application suppliers (FO), this method comprising the following steps:
- generating a pair of asymmetric keys and storage of the private key in the security module (US-SM), the public key (KPuUS) being stored by an authority (IS) in charge of the management of the security module,
- introducing at least one public key of the authority (KPuIS) in the security module (US-SM),
- receiving by the operator (OP) of a request from a supplier (FO) and transmission of this request to the authority (IS), this request comprising at least the supplier's public key (KPuFO) and characteristics of the necessary memory zone,
- transmitting by the authority (IS) of the public key of the security module (KpuFO) to the operator (OP),
- transmitting by the operator (OP) of a memory zone reservation instruction (RSC) according to the size of the memory space required to the security module (US-SM) together with the supplier's public key (KPuFO), the operator (OP) having information concerning the use of the memory zones of the security module (US-SM),
- transmitting by the operator (OP) of the public key (KPuUS) of the security module to the supplier (FO),
- establishing a secure communication channel between the supplier (FO) and the security module (US-SM),
- loading of an application in the security module (US-SM) by the supplier (FO), without that the operator has access to the data exchanged between the supplier and the security module,
- avoiding an update or a new download of an application by the supplier (FO) in the memory zone dedicated to a given application by clearing by the operator (OP) of the public key of the supplier and all memory zone when the clearing conditions are met.

2. Memory zones allocation method according to claim 1, **characterized in that** the clearing conditions are met when a program of the memory zone has been executed a number of time equal or greater than a predefined limit.

3. Memory zones allocation method according to claim 1, **characterized in that** the clearing conditions are met when a program of the memory zone has been executed during a time equal or greater than a predefined time limit.

4. Memory zones allocation method according to claim 1, **characterized in that** the pair of asymmetric keys is generated by the security module, the public key then being transmitted to the authority.

5. Memory zones allocation method according to claim 1, **characterized in that** the initialization parameters of a session key (M, b) pertaining to the operator are stored in the security modules during the initialization.

6. Memory zones allocation method according to claims 1 to 5, **characterized in that** the supplier transmits the initialization parameters of a session key (M, b) to the operator, these parameters being transmitted to the security module during the reservation of a resource.

7. Memory zones allocation method according to claims 1 to 6, **characterized in that** the establishment of a secure communication between the supplier and the security module is based on the use of the supplier's public key by the security module and the use of the security module's public key by the supplier.

8. Memory zones allocation method according to claim 5, **characterized in that** the establishment of a secure communication between the operator and the security module is based on the generation of a session key using the initialization parameters (M, b) of the operator.

9. Memory zones allocation method according to claim 6, **characterized in that** the establishment of a secure communication between the supplier and the security module is based on the generation of a session key using the initialization parameters (M, b) of the supplier.

10. Memory zones allocation method according to one of the previous claims, **characterized in that** the authority (IS) and the operator (OP) form the same entity.

11. Memory zones allocation method according to one of the previous claims, **characterized in that** the resource reservation instruction (RES) includes the sending of a domain key (DK), which is specific to an application and common to all the security modules having this application, this key being used for the establishment of a secure communication between the supplier (FO) and the security module.
